# EUROPÄISCHE PATENTSCHRIFT

(11) **EP 3 870 472 B1**
(45) Veröffentlichungstag und Bekanntmachung des Hinweises auf die Patenterteilung: **04.05.2022**
(21) Anmeldenummer: 19778432.5
(22) Anmeldetag: 10.09.2019
(51) Int. Cl.: B60K 15/01, B60K 15/063, B62D 21/16, F02M 37/00, B60R 16/04, B62J 35/00

(54) **KRAFTSTOFFTANK-BEFESTIGUNGSBAUGRUPPE FÜR EIN MOTORRAD UND MOTORRADBAUGRUPPE**
FUEL TANK FASTENING ASSEMBLY FOR A MOTORCYCLE, AND MOTORCYCLE ASSEMBLY
MODULE DE FIXATION DE RÉSERVOIR DE CARBURANT DESTINÉ À UNE MOTOCYCLETTE ET MODULE DE MOTOCYCLETTE

(30) Priorität: 25.10.2018 DE 102018126584
(43) Veröffentlichungstag der Anmeldung: 01.09.2021
(73) Patentinhaber: Bayerische Motoren Werke Aktiengesellschaft, 80809 München (DE)
(72) Erfinder: PAZULLA, Martin, 82515 Wolfratshausen (DE); KRYCH, Tim, 81825 München (DE)
(86) Internationale Anmeldenummer: PCT/EP2019/074078
(87) Internationale Veröffentlichungsnummer: WO 2020/083558

(56) Entgegenhaltungen:
- WO-A1-2018/179299
- JP-A- H0 228 084
- JP-A- 2001 233 270
- JP-A- 2013 136 978
- US-A1- 2010 193 275

## Beschreibung

Die vorliegende Erfindung betrifft eine Motorradbaugruppe mit einer Kraftstofftank-Befestigungsbaugruppe.

Zur Befestigung eines Kraftstofftanks bei Motorrädern sind üblicherweise separate Halter vorgesehen. Diese Halter überbrücken einen Abstand vom Kraftstofftank zu einem Motorradrahmen und ermöglichen eine Befestigung des Kraftstofftanks am Rahmen.

Nachteilig hierbei ist, dass sich durch die zusätzlichen Halter ein hoher Aufwand bei der Montage sowie hohe Herstellkosten ergeben.

Die JP 2001 233270 A offenbart eine Motorradbaugruppe, bei der ein Kraftstofftank und eine Batterie separat an einem Motorradrahmen befestigt sind.

Die JP H02 28084 A zeigt eine Motorradbaugruppe mit einem Kraftstofftank, der mittels eines Bügels an einem Hauptrahmen fixiert ist. Die Batterie ist auf einem Batterieträger gelagert.

Die JP 2013 136987 A offenbart eine Motorradbaugruppe mit einem Motorradrahmen, der sich aus mehreren Rahmenteilen zusammensetzt. Ein Kraftstofftank und eine Batterie sind an unterschiedlichen Rahmenteilen befestigt.

Die US 2010/193275 A1 offenbart ein Motorrad mit einem Rahmen, der aus mehreren Gussteilen zusammengesetzt ist, wobei ein Kraftstofftank in eines der Rahmenteile integriert ist.

Die WO 2018/179299 A1 offenbart eine Befestigungsstruktur zum Befestigen eines Brennstoffbehälters an einem Fahrzeugkarosserierahmen eines Motorrads.

Es ist folglich eine Aufgabe der vorliegenden Erfindung, eine Kraftstofftank-Befestigungsbaugruppe anzugeben, die eine einfache und kostengünstige Montage des Kraftstofftanks an einem Motorrad, insbesondere an einem Motorradrahmen ermöglicht.

Diese Aufgabe wird erfindungsgemäß gelöst durch eine Motorradbaugruppe mit einer Kraftstofftank-Befestigungsbaugruppe, mit einem Kraftstofftank, einem an dem Kraftstofftank befestigten Haltebügel und einem Batterieträger, wobei der Haltebügel an dem Batterieträger befestigt ist, und mit einem Motorradrahmen, wobei der Batterieträger der Kraftstofftank-Befestigungsbaugruppe an dem Motorradrahmen befestigt ist und im Batterieträger die Batterie untergebracht und befestigt ist, sodass der Kraftstofftank über den Batterieträger am Motorradrahmen befestigt ist.

Durch die Befestigung des Kraftstofftanks an dem Batterieträger sind keine zusätzlichen Halter notwendig, um den Kraftstofftank zu montieren. Insbesondere übernimmt der Batterieträger, der an einem Motorradrahmen montiert sein kann, die Funktion eines Halters und überbrückt eine Distanz vom Kraftstofftank zum Motorradrahmen.

Auf diese Weise werden weniger Bauteile zur Montage des Kraftstofftanks benötigt, was sich positiv auf den Montageaufwand und die Fertigungskosten auswirkt. Zudem kann aufgrund der reduzierten Anzahl an Bauteilen eine höhere Toleranzgenauigkeit erreicht werden.

Gemäß einer Ausführungsform ist der Haltebügel an dem Kraftstofftank angeschweißt. Dadurch kann eine besonders stabile Verbindung zwischen dem Haltebügel und dem Kraftstofftank erreicht werden.

An dem Batterieträger kann eine Halterung integral angeformt sein, an der der Haltebügel befestigt, insbesondere verschraubt ist. Mittels der Halterung kann der Kraftstofftank besonders einfach an dem Batterieträger befestigt werden, und der Batterieträger erfüllt die zusätzliche Befestigungsfunktion auf einfache Art und Weise, ohne dass zusätzliche Bauteile benötigt werden.

Die Halterung umfasst vorzugsweise zwei Aufnahmelaschen mit jeweils einem Durchsteckloch, durch das ein Befestigungsmittel zur Befestigung des Haltebügels gelagert ist. Der Haltebügel mit dem daran befestigten Kraftstofftank kann auf diese Weise besonders einfach und zuverlässig positioniert und montiert werden.

Gemäß einer bevorzugten Ausführungsform umfasst der Haltebügel einen U-förmig gebogenen Abschnitt, wobei die Aufnahmelaschen in montiertem Zustand der Kraftstofftank-Befestigungsbaugruppe zwischen den seitlichen Schenkeln des U-förmigen Abschnitts angeordnet sind. Der Haltebügel kann folglich bei der Montage des Kraftstofftanks an den Aufnahmelaschen ausgerichtet werden.

Zur Befestigung weist der Haltebügel vorzugsweise ebenfalls Durchstecklöcher auf, insbesondere an den seitlichen Schenkeln des Haltebügels, wobei die Durchstecklöcher derart angeordnet sind, dass sie in einem ordnungsgemäß montierten Zustand der Kraftstofftank-Befestigungsbaugruppe mit den Durchstecklöchern der Aufnahmelaschen fluchten. Das Befestigungsmittel kann somit durch die Durchstecklöcher des Haltebügels und der Aufnahmelaschen hindurchgesteckt werden, um den Haltebügel am Batterieträger zu befestigen.

In den Durchstecklöchern der Aufnahmelaschen steckt beispielsweise jeweils eine Gummitülle. Die Gummitülle ist vorzugsweise derart geformt, dass ein Teil der Gummitülle zwischen dem Haltebügel und der Aufnahmelasche angeordnet ist. Auf diese Weise wird ein unbeabsichtigtes Verdrehen des Haltebügels vermieden, da die Gummitülle eine erhöhte Reibung zwischen dem Haltebügel und der Aufnahmelasche erzeugt. Statt einer Gummitülle sind auch andere Elemente denkbar, die eine erhöhte Reibung zwischen dem Haltebügel und der Aufnahmelasche erzeugen, zum Beispiel Gummischeiben oder Ähnliches.

Gemäß einer Ausführungsform ist zwischen den Aufnahmelaschen eine Distanzhülse angeordnet, wobei sich das Befestigungsmittel zur Befestigung des Haltebügels in montiertem Zustand durch die Distanzhülse hindurch erstreckt. Durch die Distanzhülse werden die Aufnahmelaschen bei und nach der Montage gestützt und es wird verhindert, dass die Aufnahmelaschen beschädigt werden oder brechen, wenn beispielsweise das Befestigungsmittel zu fest angezogen wird.

Um eine feste Verbindung zwischen dem Haltebügel und dem Batterieträger, insbesondere der Halterung des Batterieträgers, zu erreichen, ist beispielsweise auf den Haltebügel eine Steckmutter aufgesteckt, wobei das Befestigungsmittel in die Steckmutter eingeschraubt ist. Es ist auch denkbar, dass der Haltebügel in einer alternativen Ausführungsform anstelle eines Durchstecklochs eine Gewindebohrung aufweist, in die das Befestigungsmittel eingeschraubt werden kann. Weiter alternativ kann anstelle einer Steckmutter eine herkömmliche Mutter verwendet werden, um den Haltebügel zu befestigen.

Der Batterieträger ist vorzugsweise ein Kunststoffbauteil. Bei einem Kunststoffbauteil können zusätzliche Befestigungsgeometrien, wie beispielsweise die Aufnahmelaschen, besonders einfach integral geformt werden. Die Bauteilkosten werden dadurch nur geringfügig beeinflusst.

Der Batterieträger ist beispielsweise wannenförmig und umfasst eine Aufnahme für eine Batterie sowie, vorzugsweise, zusätzlich eine Aufnahme für ein ABS-Modul und/oder eine Höhenstandserkennung. Durch die Wannenform kann der Batterieträger an eine Form der Batterie angepasst sein und die Batterie kann insbesondere vollständig innerhalb des wannenförmigen Batterieträgers gelagert sein. Somit verhindert der Batterieträger im Bedarfsfall eine Beschädigung der Batterie.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1 eine Kraftstofftank-Befestigungsbaugruppe für eine erfindungsgemäße Motorradbaugruppe in montiertem Zustand,
- Figur 2 den Batterieträger der Kraftstofftank-Befestigungsbaugruppe,
- Figur 3 eine erfindungsgemäße Motorradbaugruppe in einer Draufsicht und
- Figur 4 die Motorradbaugruppe aus Figur 3 in einer Seitenansicht.

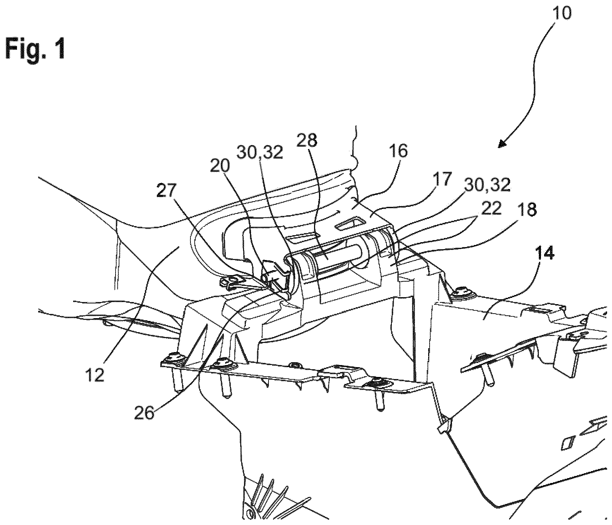

Figur 1 zeigt eine Kraftstofftank-Befestigungsbaugruppe 10 für ein Motorrad in einer isometrischen Ansicht.

Die Kraftstofftank-Befestigungsbaugruppe 10 umfasst einen Kraftstofftank 12 und einen Batterieträger 14. An dem Kraftstofftank 12 ist ein Haltebügel 16 befestigt, insbesondere angeschweißt. In den Figuren ist der Einfachheit halber nur ein Teil des Kraftstofftanks 12 dargestellt.

Der Haltebügel 16 ist im gezeigten Ausführungsbeispiel ein Blechbiegeteil und umfasst einen U-förmig gebogenen Abschnitt 17.

Der an dem Kraftstofftank 12 befestigte Haltebügel 16 ist mittels eines Befestigungsmittels 20 an dem Batterieträger 14 befestigt, insbesondere verschraubt.

Zu diesem Zweck weist der Batterieträger 14 eine Halterung 18 auf, die integral am Batterieträger 14 angeformt ist.

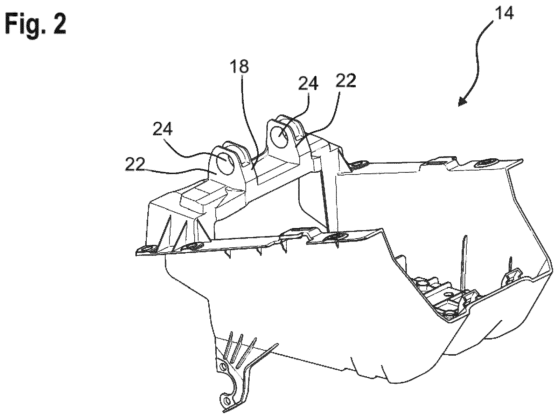

Um eine besonders einfache Befestigung des Haltebügels 16 an dem Batterieträger 14 zu ermöglichen, hat die Halterung 18 zwei Aufnahmelaschen 22 mit jeweils einem Durchsteckloch 24. Die Durchstecklöcher 24 sind in Figur 2 zu sehen, in der eine separate Ansicht des Batterieträgers 14 dargestellt ist.

Der Haltebügel 16 weist korrespondierende Durchstecklöcher auf, die mit den Durchstecklöchern 24 der Halterung 18 fluchten, wenn der Haltebügel 16 in einer Montageposition angeordnet ist. Das Befestigungsmittel 20 kann zur Befestigung des Haltebügels 16 durch die Durchstecklöcher 24 der Halterung 18 und des Haltebügels 16 durchgesteckt werden.

Im gezeigten Ausführungsbeispiel ist zur Befestigung zudem eine Steckmutter 26 vorgesehen, die auf den Haltebügel 16 aufgesteckt ist. Indem das Befestigungsmittel 20 in die Steckmutter 26 eingeschraubt wird, wird der Haltebügel 16 fest an dem Batterieträger 14 fixiert.

Wie in Figur 1 zu sehen ist, sind die Aufnahmelaschen 22 in montiertem Zustand der Kraftstofftank-Befestigungsbaugruppe 10 zwischen den seitlichen Schenkeln 27 des U-förmigen Abschnitts 17 des Haltebügels 16 angeordnet.

Um zu vermeiden, dass die Halterung 18 beim Festziehen des Befestigungsmittels 20 beschädigt wird, ist eine Distanzhülse 28 vorgesehen. Durch die Distanzhülse 28 wird vermieden, dass die Aufnahmelaschen 22 durch zu festes Anziehen des Befestigungsmittels 20 beschädigt beziehungsweise abgebrochen werden.

Des Weiteren sind Gummitüllen 30 vorgesehen, die jeweils in die Durchstecklöcher 24 der Aufnahmelaschen 22 eingesteckt sind. Die Gummitüllen 30 weisen jeweils einen Kragen 32 auf, der zwischen dem Haltebügel 16, insbesondere einem seitlichen Schenkel 27 des Haltebügels 16, und einer Aufnahmelasche 22 angeordnet ist. Durch die Gummitüllen 30 wird ein unbeabsichtigtes Verdrehen des Haltebügels 16 vermieden, da durch die Gummitüllen 30 eine erhöhte Reibung zwischen dem Haltebügel 16 und der Halterung 18 erzeugt wird.

Figur 2 zeigt eine isometrische Ansicht des Batterieträgers 14, der wannenförmig ist.

Der Batterieträger 14 ist ein Kunststoffbauteil, insbesondere ein Kunststoffspritzgussbauteil. Dadurch können im Batterieträger 14 komplexe Geometrien verwirklicht werden. Beispielsweise kann der Batterieträger 14 zusätzlich zur Halterung 18 eine Aufnahme für ein ABS-Modul und/oder eine Höhenstandserkennung aufweisen. Diese Aufnahmen lassen sich in Form einer Aussparung oder einer Rastgeometrie verwirklichen, die jedoch der Einfachheit halber in den Figuren nicht dargestellt sind.

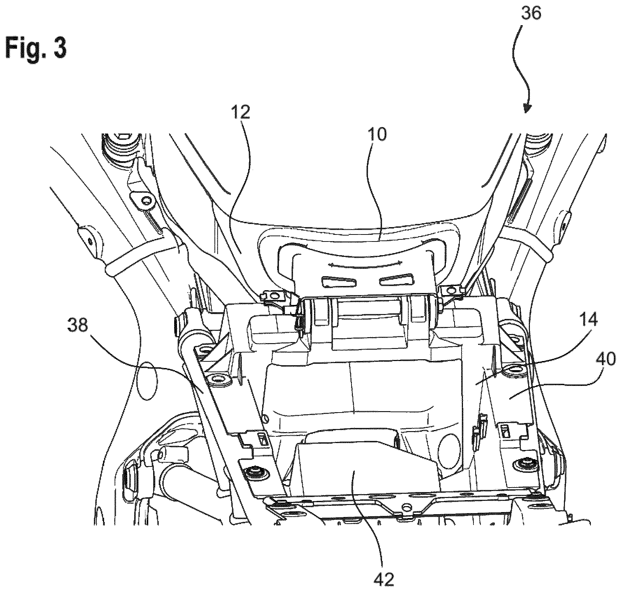

Figur 3 zeigt eine Motorradbaugruppe 36 mit einer Kraftstofftank-Befestigungsbaugruppe 10.

Die Motorradbaugruppe 36 umfasst des Weiteren einen Motorradrahmen 38, an dem der Batterieträger 14 der Kraftstofftank-Befestigungsbaugruppe 10 befestigt, insbesondere verschraubt ist. Zu diesem Zweck sind an dem Batterieträger 14 Befestigungsstege 40 angeformt.

In dem Batterieträger 14 ist eine Batterie 42 untergebracht und befestigt.

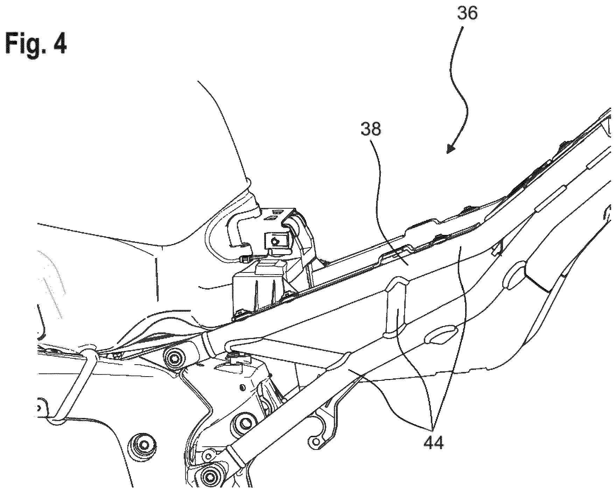

Figur 4 zeigt eine Seitenansicht der Motorradbaugruppe 36. In dieser Ansicht ist der Motorradrahmen 38 besonders gut zu sehen.

Der Motorradrahmen 38 bildet ein tragendes Fahrgestell eines Motorrads und ist vorzugsweise aus Stahl gefertigt. Insbesondere umfasst der Motorradrahmen 38 mehrere miteinander verschweißte Streben 44.

## Patentansprüche

1. Motorradbaugruppe (36) mit einer Kraftstofftank-Befestigungsbaugruppe (10) für ein Motorrad, mit einem Kraftstofftank (12), einem an dem Kraftstofftank (12) befestigten Haltebügel (16) und einem Batterieträger (14), wobei der Haltebügel (16) an dem Batterieträger (14) befestigt ist, und mit einem Motorradrahmen (38), **dadurch gekennzeichnet, dass** der Batterieträger (14) der Kraftstofftank-Befestigungsbaugruppe (10) an dem Motorradrahmen (38) befestigt ist, sodass der Kraftstofftank (12) über den Batterieträger (14) am Motorradrahmen (38) befestigt ist, und im Batterieträger (14) die Batterie (42) untergebracht und befestigt ist.

2. Motorradbaugruppe (36) nach Anspruch 1, **dadurch gekennzeichnet, dass** der Haltebügel (16) an dem Kraftstofftank (12) angeschweißt ist.

3. Motorradbaugruppe (36) nach einem der vorhergehenden Ansprüche, **dadurch gekennzeichnet, dass** an dem Batterieträger (14) eine Halterung (18) integral angeformt ist, an der der Haltebügel (16) befestigt, insbesondere verschraubt ist.

4. Motorradbaugruppe (36) nach Anspruch 3, **dadurch gekennzeichnet, dass** die Halterung (18) zwei Aufnahmelaschen (22) mit jeweils einem Durchsteckloch (24) umfasst, durch das ein Befestigungsmittel (20) zur Befestigung des Haltebügels (16) gelagert ist.

5. Motorradbaugruppe (36) nach Anspruch 4, **dadurch gekennzeichnet, dass** der Haltebügel (16) einen U-förmig gebogenen Abschnitt (17) umfasst, wobei die Aufnahmelaschen (22) in montiertem Zustand der Kraftstofftank-Befestigungsbaugruppe (10) zwischen den seitlichen Schenkeln (27) des U-förmigen Abschnitts (17) angeordnet sind.

6. Motorradbaugruppe (36) nach einem der Ansprüche 4 und 5, **dadurch gekennzeichnet, dass** zwischen den Aufnahmelaschen (22) eine Distanzhülse (28) angeordnet ist, wobei das Befestigungsmittel (20) zur Befestigung des Haltebügels (16) durch die Distanzhülse (28) hindurchgeführt ist.

7. Motorradbaugruppe (36) nach einem der Ansprüche 4 bis 6, **dadurch gekennzeichnet, dass** auf den Haltebügel (16) eine Steckmutter (26) aufgesteckt ist, wobei das Befestigungsmittel (20) in die Steckmutter (26) eingeschraubt ist.

8. Motorradbaugruppe (36) nach einem der vorhergehenden Ansprüche, **dadurch gekennzeichnet, dass** der Batterieträger (14) ein Kunststoffbauteil ist.

9. Motorradbaugruppe (36) nach einem der vorhergehenden Ansprüche, **dadurch gekennzeichnet, dass** der Batterieträger (14) wannenförmig ist und eine Aufnahme für eine Batterie (42) sowie, vorzugsweise, zusätzlich für ein ABS-Modul und/oder eine Höhenstandserkennung umfasst.

## Claims

1. Motorcycle assembly (36) with a fuel tank fastening assembly (10) for a motorcycle, with a fuel tank (12), a retaining bracket (16), fastened to the fuel tank (12), and a battery carrier (14), the retaining bracket (16) being fastened to the battery carrier (14), and with a motorcycle frame (38), **characterized in that** the battery carrier (14) of the fuel tank fastening assembly (10) is fastened to the motorcycle frame (38), with the result that the fuel tank (12) is fastened via the battery carrier (14) to the motorcycle frame (38), and the battery (42) is accommodated and fastened in the battery carrier (14).

2. Motorcycle assembly (36) according to Claim 1, **characterized in that** the retaining bracket (16) is welded on the fuel tank (12).

3. Motorcycle assembly (36) according to either of the preceding claims, **characterized in that** a holder (18) is formed integrally on the battery carrier (14), to which holder (18) the retaining bracket (16) is fastened, in particular screwed.

4. Motorcycle assembly (36) according to Claim 3, **characterized in that** the holder (18) comprises two receiving lugs (22) with in each case one plug-through hole (24), by way of which a fastening means (20) for fastening the retaining bracket (16) is mounted.

5. Motorcycle assembly (36) according to Claim 4, **characterized in that** the retaining bracket (16) comprises a section (17) which is curved in a U-shaped manner, the receiving lugs (22) being arranged between the lateral limbs (27) of the U-shaped section (17) in the mounted state of the fuel tank fastening assembly (10) .

6. Motorcycle assembly (36) according to either of Claims 4 and 5, **characterized in that** a spacer sleeve (28) is arranged between the receiving lugs (22), the fastening means (20) for fastening the retaining bracket (16) being guided through the spacer sleeve (28).

7. Motorcycle assembly (36) according to one of Claims 4 to 6, **characterized in that** a plug-in nut (26) is plugged onto the retaining bracket (16), the fastening means (20) being screwed into the plug-in nut (26).

8. Motorcycle assembly (36) according to one of the preceding claims, **characterized in that** the battery carrier (14) is a plastic component.

9. Motorcycle assembly (36) according to one of the preceding claims, **characterized in that** the battery carrier (14) is tub-shaped and comprises a receptacle for a battery (42) and, preferably, additionally for an ABS module and/or a level detection means.

## Revendications

1. Module de motocyclette (36) comprenant un module de fixation de réservoir de carburant (10) pour une motocyclette, comprenant un réservoir de carburant (12), un étrier de retenue (16) fixé au réservoir de carburant (12) et un support de batterie (14), l'étrier de retenue (16) étant fixé au support de batterie (14), et comprenant un cadre de motocyclette (38), **caractérisé en ce que**
le support de batterie (14) du module de fixation de réservoir de carburant (10) est fixé au cadre de motocyclette (38) de telle sorte que le réservoir de carburant (12) est fixé au cadre de motocyclette (38) par l'intermédiaire du support de batterie (14), et la batterie (42) est logée et fixée dans le support de batterie (14).

2. Module de motocyclette (36) selon la revendication 1, **caractérisé en ce que** l'étrier de retenue (16) est soudé au réservoir de carburant (12).

3. Module de motocyclette (36) selon l'une quelconque des revendications précédentes, **caractérisé en ce qu'**une attache (18) est formée d'un seul tenant sur le support de batterie (14), sur laquelle l'étrier de retenue (16) est fixé, notamment vissé.

4. Module de motocyclette (36) selon la revendication 3, **caractérisé en ce que** l'attache (18) comprend deux pattes de réception (22) avec chacune un trou traversant (24), à travers lequel est monté un moyen de fixation (20) pour la fixation de l'étrier de retenue (16) .

5. Module de motocyclette (36) selon la revendication 4, **caractérisé en ce que** l'étrier de retenue (16) comprend une section incurvée en forme de U (17), les pattes de réception (22) étant agencées entre les branches latérales (27) de la section incurvée en forme de U (17) à l'état monté du module de fixation de réservoir de carburant (10).

6. Module de motocyclette (36) selon l'une quelconque des revendications 4 et 5, **caractérisé en ce qu'**une douille d'écartement (28) est agencée entre les pattes de réception (22), le moyen de fixation (20) pour la fixation de l'étrier de retenue (16) étant passé à travers la douille d'écartement (28).

7. Module de motocyclette (36) selon l'une quelconque des revendications 4 à 6, **caractérisé en ce qu'**un écrou enfichable (26) est enfiché sur l'étrier de retenue (16), le moyen de fixation (20) étant vissé dans l'écrou à emboîtement (26).

8. Module de motocyclette (36) selon l'une quelconque des revendications précédentes, **caractérisé en ce que** le support de batterie (14) est un composant en matière plastique.

9. Module de motocyclette (36) selon l'une quelconque des revendications précédentes, **caractérisé en ce que** le support de batterie (14) est en forme de cuve et comprend un réceptacle pour une batterie (42) ainsi que, de préférence, en outre pour un module ABS et/ou un dispositif de détection de hauteur.
